# EUROPEAN PATENT APPLICATION

(11) **EP 3 845 992 A1**
(43) Date of publication of application: **07.07.2021**
(21) Application number: 18931617.7
(22) Date of filing: 31.08.2018
(51) Int. Cl.: G05D 1/10

(54) **CONTROL METHOD FOR MOVABLE PLATFORM, MOVABLE PLATFORM, TERMINAL DEVICE AND SYSTEM**

(71) Applicant: SZ DJI Technology Co., Ltd., Shenzhen, Guangdong 518057 (CN)
(72) Inventor: TANG, Ketan, Shenzhen, Guangdong 518057 (CN); YU, Yiqi, Shenzhen, Guangdong 518057 (CN)
(74) Representative: Appelt, Christian W.
(86) International application number: PCT/CN2018/103678
(87) International publication number: WO 2020/042186

(57) **Abstract**

The present disclosure provides a method for controlling a movable platform, a movable platform, a terminal device, and a system. The method includes obtaining an image including a target pattern through an image acquisition device, identify the target pattern and obtain the identification information of the target pattern as the target identification information, and control the movable platform to execute the target action instruction corresponding to the target identification information based on the target identification information. Therefore, the target pattern can be used to interact with the movable platform, no additional control terminal is needed to communicate with the movable platform, and the control accuracy of the movable platform is higher.

## Description

### TECHNICAL FIELD

The present disclosure relates to the technical field of movable platforms and, more specifically, to a method for controlling a movable platform, a movable platform, a terminal device, and a system.

### BACKGROUND

A user can control the movable platform through an interaction with the movable platform. Taking a movable platform such as an unmanned aerial vehicle (UAV) as an example, in conventional technology, there are two interaction methods of between the user and the UAV. In one method, the user interacts with the UAV through a control terminal (a mobile phone, a remote control, etc.). That is, the user operates the control terminal to send control instructions to the UAV to control the UAV. In another method, the user interacts with the UAV through interactive information, such as gestures. For example, the UAV can recognize the user's gesture and then perform the operation corresponding to the gesture. The user can control the UAV through gestures without needing to control the terminal, which reduces costs. However, the UAV needs to have high performance for gesture recognition, and there are certain errors in gesture recognition performed by UAVs. For example, the user's gesture may be to control the UAV to rotate by 10°. Due to an error of gesture recognition, the UAV would rotate by 5°. Therefore, controlling the UAV through gestures often has the problem of insufficient control accuracy.

### SUMMARY

Embodiments of the present disclosure provide a method for controlling a movable platform, a movable platform, a terminal device, and a system, which can be used to realize the control of the movable platform through a pattern and improve the control accuracy of the movable platform.

In a first aspect, an embodiment of the present disclosure provides a method for controlling a movable platform, which is applied to the movable platform, including obtaining an image including a target pattern through an image acquisition device, identifying the target pattern and obtaining identification information of the target pattern as target identification information, and controlling the movable platform to execute a target action instruction corresponding to the target identification information based on the target identification information.

In a second aspect, an embodiment of the present disclosure provides a method for controlling a movable platform, which is applied to a terminal device, including receiving a target pattern or target identification information sent by a movable platform, after receiving the target pattern sent by the movable platform, identifying the target pattern, and obtaining identification information of the target pattern as the target identification information, determining a target action instruction corresponding to the target identification information based on the target identification information, and sending a control instruction to the movable platform, the control instruction being used to control the movable platform to execute the target action instruction.

In a third aspect, an embodiment of the present disclosure provides a movable platform including an image acquisition device and a processor. The image acquisition device is configured to obtain images. The processor is configured to obtain an image including a target pattern through the image acquisition device, identify the target pattern and obtain identification information of the target pattern as target identification information, and control a movable platform to execute a target action instruction corresponding to the target identification information based on the target identification information.

In a fourth aspect, an embodiment of the present disclosure provides a terminal device including a communication device and a processor. The communication device is configured to receive a target pattern or target identification information sent by a movable platform. The processor is configured to determine a target action instruction corresponding to the target identification information based on the target identification information, and identify the target pattern and obtain identification information of the target pattern as the target identification information after the communication device receives the target pattern sent by the movable platform. The communication device is further configured to send a control instruction to the movable platform, the control instruction being used to control the movable platform to execute the target action instruction.

In a fifth aspect, an embodiment of the present disclosure provides a control system for a movable platform. The control system includes the movable platform of the third aspect and the terminal of the fourth aspect.

In a sixth aspect, an embodiment of the present disclosure provides a computer-readable storage medium. The computer-readable storage medium stores a computer program, the computer program including at least one piece of code, and the at least one piece of code can be executed by a computer to control the computer to execute the movable platform control method described in the first aspect or the second aspect.

In a seventh aspect, an embodiment of the present disclosure provides a computer program. When the computer program is executed by a computer, it can be used to implement the movable platform control method described in the first aspect or the second aspect.

Embodiments of the present disclosure provide a method for controlling a movable platform, a movable platform, a terminal device, and a system. The method includes obtaining an image including a target pattern through an image acquisition device, identify the target pattern and obtain the identification information of the target pattern as the target identification information, and control the movable platform to execute the target action instruction corresponding to the target identification information based on the target identification information. Therefore, the target pattern can be used to interact with the movable platform, and no additional control terminal is needed to communicate with the movable platform. In addition, the present disclosure has high control accuracy on the movable platform.

### BRIEF DESCRIPTION OF THE DRAWINGS

In order to illustrate the technical solutions in accordance with the embodiments of the present disclosure more clearly, the accompanying drawings to be used for describing the embodiments are introduced briefly in the following. It is apparent that the accompanying drawings in the following description are only some embodiments of the present disclosure. Persons of ordinary skill in the art can obtain other accompanying drawings in accordance with the accompanying drawings without any creative efforts.
FIG. 1 is a schematic architecture diagram of a movable platform control system according to an embodiment of the present disclosure.
FIG. 2 is a flowchart of a movable platform control method according to an embodiment of the present disclosure.
FIG. 3 is a flowchart of the movable platform control method according to another embodiment of the present disclosure.
FIG. 4 is a flowchart of the movable platform control method according to another embodiment of the present disclosure.
FIG. 5 is a flowchart of the movable platform control method according to another embodiment of the present disclosure.
FIG. 6 is schematic structural diagram of a movable platform according to an embodiment of the present disclosure.
FIG. 7 is a schematic structural diagram of a terminal device according to an embodiment of the present disclosure.
FIG. 8 is a schematic structural diagram of a movable platform control system according to an embodiment of the present disclosure.

### DETAILED DESCRIPTION OF THE EMBODIMENTS

In order to make the objectives, technical solutions, and advantages of the present disclosure more clear, the technical solutions in the embodiments of the present disclosure will be described below with reference to the drawings. It will be appreciated that the described embodiments are some rather than all of the embodiments of the present disclosure. Other embodiments conceived by those having ordinary skills in the art on the basis of the described embodiments without inventive efforts should fall within the scope of the present disclosure.

Embodiments of the present disclosure provide a method for controlling a movable platform, a movable platform, a terminal device, and a system. The movable platform can be, for example, a UAV, an unmanned ship, an unmanned vehicle, a robot, etc. In some embodiments, the UAV may be, for example, a rotorcraft, for example, a multi-rotor aircraft propelled by a plurality of propulsion devices through air, and the embodiments of the present disclosure is not limited thereto.

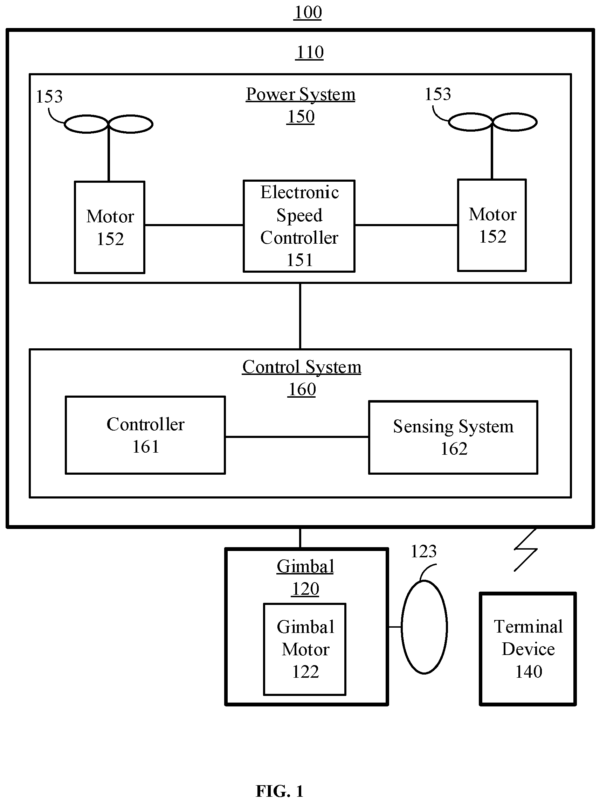

FIG. 1 is a schematic architecture diagram of a movable platform control system according to an embodiment of the present disclosure. In this embodiment, the movable platform is being described as a UAV as an example.

A supervisory movable platform control system 100 includes a UAV 110 and a terminal device 140. In this embodiment, the UAV 110 is taken as an example of the UAV, which may include a power system 150, a control system 160, a frame and a gimbal 120 carried by the frame. The UAV 110 may communicate wirelessly with the terminal device 140. In other embodiments, the UAV may also be an unmanned vehicle or an unmanned ship.

The frame can include a fuselage and an undercarriage (also called a landing gear). The fuselage may include a center frame and one or more arms connected to the center frame. The one or more arms may extend radially from the center frame. The undercarriage may be connected to the fuselage and used to support the UAV 110 when landing. The control system 160 may be disposed in the fuselage.

The power system 150 may include one or more electronic speed controllers (or ESCs for short) 151, one or more propellers 153, and one or more electric motors 152 corresponding to the one or more propellers 153. In some embodiments, the motor 152 may be connected between the ESC 151 and the propeller 153. The motor 152 and the propeller 153 may be disposed on an arm of the UAV 110. The ESC 151 may be used to receive the driving signal generated by the control system 160 and provide, according to the driving signal, a driving current to the motor 152 to control the rotation speed of the motor 152. It should be noted that one ESC may correspond to multiple motors, or multiple ESCs 151 may correspond to one motor 152. The motor 152 can be used to drive the propeller to rotate, thereby providing power for the flight of the UAV 110. The power enables the UAV 110 to achieve one or more degrees of freedom of movement. In some embodiments, the UAV 110 may rotate about one or more rotation axes. For example, the rotation axis may include a roll axis, a yaw axis, and a pitch axis. It should be understood that the motor 152 may be a direct current motor or an alternate current motor. In addition, the motor 152 may be a brushless motor or a brushed motor.

The control system 160 may include a controller 161 and a sensing system 162. The sensing system 162 may be used to measure the attitude information of the UAV, that is, the position information and status information of the UAV 110 in space, such as three-dimensional position, three-dimensional angle, three-dimensional velocity, three-dimensional acceleration, and three-dimensional angular velocity. The sensing system 162 may include at least one of a gyroscope, an ultrasonic sensor, an electronic compass, an inertial measurement unit (IMU), a vision sensor, a global navigation satellite system, and a barometer. For example, the global navigation satellite system may be a global positioning system (GPS). The controller 161 may be used to control the flight or operation of the UAV 110. For example, according to the attitude information measured by the sensing system 162, the controller 161 can control the flight or operation of the UAV 11 0. It should be understood that the controller 161 may control the UAV 110 according to a pre-programmed program instruction.

The gimbal 120 may include a gimbal motor 122. The gimbal may be used to carry an imaging device 123. The controller 161 may control the movement of gimbal 120 by controlling the rotation of the gimbal motor 122. Optionally, in another embodiment, the gimbal 120 may further include a gimbal controller for controlling the movement of the gimbal 120 by controlling the gimbal motor 122. It should be understood that the gimbal 120 may be independent of the UAV 11 0 or may be part of the UAV 11 0. It should be understood that the gimbal motor 122 may be a direct current motor or an alternate current motor. In addition, the gimbal motor 122 may be a brushless motor or a brush motor. It should also be understood that the gimbal may be located on the top of the UAV or at the bottom of the UAV, or on the front of the UAV, or no the rear of the UAV, or on the left of the UAV, or on the right of the UAV.

The imaging device 123 may be a device for capturing images, such as a camera or a video camera. The imaging device 123 may communicate with a flight controller and perform shooting under the control of the flight controller. In one embodiment, the imaging device 123 includes at least a photosensitive element, the photosensitive element may be a complementary metal oxide semiconductor (CMOS) sensor or a charge-coupled device (CCD) sensor. It should be understood that the imaging device 123 may also be directly fixed on the UAV 110, thereby omitting the gimbal 120.

The terminal device 140 may be located on the ground side of the movable platform control system 100 and can communicate with the UAV 110 in a wirelessly manner. In some embodiments, the terminal device 140 may program the UAV 110 through a software development kit (SDK) interface to control the flight of the UAV. In other embodiments, the terminal device 140 can also communicate with the UAV 11 0 via a wired manner. Further, the terminal device 140 can also program the UAV 110 in an appropriate manner, such as an API interface. This embodiment is merely an example description, which is not limited here. In some embodiments, the terminal device 140 may include a display screen. The display screen may be used to display the attitude information of the UAV 110. In addition, the images captured by the imaging device 123 can also be displayed on the display screen.

It should be understood that the above naming of the components of the UAV system is merely for identification purposes only and should not be construed as limiting the embodiments of the present disclosure.

The terminal device in the embodiments of the present disclosure may refer to a wireless terminal device, which may refer to a device with a wireless transceiver function, which can be deployed on land, including indoor or outdoor, handheld or vehicle-mounted; it may also be deployed on water (such as ships); and it may also be deployed in air (such as airplanes, balloons, and satellites). The terminal device may be a remote control device, a mobile phone, a tablet computer (Pad), a computer with wireless transceiver function, a wearable device, a virtual reality (VR) terminal, an augmented reality (AR) terminal, a wireless terminal in industrial control, a wireless terminal in self driving vehicle, a wireless terminal in remote medical, a wireless terminal in a smart grid, a wireless terminal in transportation safety, a wireless terminal in s smart city, a wireless terminal in a smart home, etc., which are not limited here.

The movable platform in each embodiment of the present disclosure can obtain an image including a target pattern through an image acquisition device, obtain a target action instruction based on the target pattern, and control the movable platform to execute the target action instruction. Each embodiment of the present disclosure will be described below.

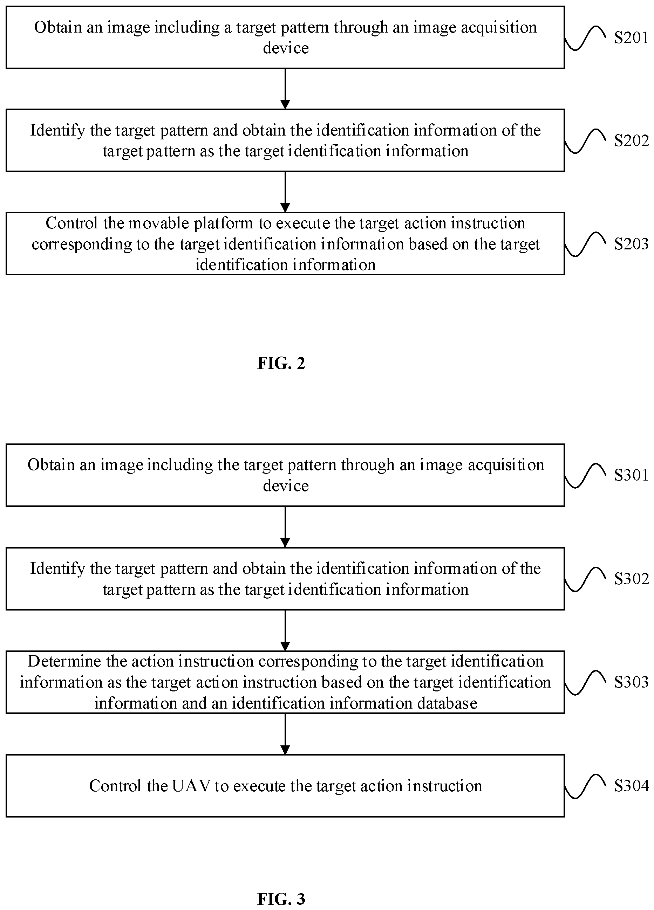

FIG. 2 is a flowchart of a movable platform control method according to an embodiment of the present disclosure. As shown in FIG. 2, in this embodiment, the UAV is taken as an example of the movable platform. The method of this embodiment can be applied to a UAV. The method includes the following processes.

S201, obtaining an image including a target pattern through an image acquisition device.

In this embodiment, patterns are used to control the UAV to perform actions. In some embodiments, the UAV can obtain images through the image acquisition device mounted thereon. When the user wants to control the UAV to perform actions, the pattern can be placed in a position that the UAV's image acquisition device can capture. In this way, the UAV can obtain the image including the target pattern through the image acquisition device. The image acquisition device may be, for example, the imaging device 123 described above.

In some embodiments, the image acquisition device may be positioned in the front, rear, left, right, above, or below of the UAV.

In some embodiments, there may be at least one image acquisition device of the UAV, and the at least one image acquisition device may be positioned at different positions of the UAV. Correspondingly, the UAV may obtain images including the target pattern through the at least one image acquisition device positioned in different positions of the UAV. In some embodiments, there may be one or more target patterns.

In some embodiments, the UAV of this embodiment may first obtain an image acquisition setting instruction, the image acquisition setting instruction can be used to select an image acquisition mode. Then the UAV may select the image acquisition mode based on the image acquisition setting instruction, and obtain eh image including the target pattern through the image acquisition device based on the image acquisition mode. In some embodiments, there may be one or more target patterns.

In some embodiments, the image acquisition mode may include a single image acquisition device capturing a single image or a plurality of images. For example, the UAV may obtain a single image through a single image acquisition device, the obtained single image may be included, and the UAV may acquire the target pattern from the single image. Alternatively, the UAV may collect a plurality of images through a single image acquisition device, such as the images including the target pattern in three frames of images. The UAV may acquire the target pattern from the three frames of images, or a single image acquisition device may simultaneously acquire a plurality of target patterns. In this way, in this embodiment, a single image acquisition device may be used to obtain images, which can increase the frame rate of image acquisition.

In some embodiments, the image acquisition mode may include a plurality of image acquisition devices alternately obtaining a plurality of images. This embodiment takes two image acquisition devices as an example, one image acquisition device is positioned in front of the UAV, and the other image acquisition device is positioned below the UAV. Correspondingly, the UAV may first control the image acquisition device positioned in front of the UAV to capture a single image or a plurality of images, control the image acquisition device positioned below the UAV to capture a single image or a plurality of images, then obtain the target pattern based on the images obtained by the two image acquisition devices described above. Therefore, this embodiment can obtain images by using image acquisition devices positioned in different positions of the UAV, which can improve the flexibility of image acquisition without occupying too much memory and ensuring the normal operation of the UAV.

In some embodiments, the image acquisition mode may include a plurality of image acquisition devices simultaneously obtaining a plurality of images. This embodiment takes two image acquisition devices as an example, one image acquisition device is positioned in front of the UAV, and the other image acquisition device is positioned below the UAV. Correspondingly, the UAV may simultaneously control the image acquisition device positioned in front of the UAV and the image acquisition device positioned below the UAV to capture a single or a plurality of images, and then obtain the target pattern based on the images obtained by the tow image acquisition devices described above.

For example, if there are two target patterns, one target pattern may be obtained from the image obtained by the image acquisition device positioned in front of the UAV, and the other target pattern may be obtained from the image obtained by the image acquisition device positioned below the UAV. If there is one target pattern, the target pattern may be obtained from the image obtained by the image acquisition device positioned in front of the UAV, and the image obtained by the image acquisition device positioned below the UAV may not include the target pattern. Alternatively, the target pattern may be obtained from the image obtained by the image acquisition device below the UAV, and the image obtained by the image acquisition device in front of the UAV may not include the target pattern. If there is one target pattern, the image obtained by the image acquisition device in front of the UAV may include part of the target pattern, while the image obtained by the image acquisition device below the UAV may include another part of the target pattern. Therefore, the UAV may obtain a complete target pattern through the images obtained by the image acquisition device in front of the UAV and the image acquisition device below the UAV.

S202, identifying the target pattern and obtaining the identification information of the target pattern as the target identification information.

In this embodiment, after the UVA obtains the image including the target pattern, it may identify the target pattern and obtain the identification information of the target pattern. The identification information of the target pattern is referred to herein as the target identification information.

In some embodiments, the target pattern may include a two-dimensional code, and the two-dimensional code may include, for example, QR code, Data Matrix, AprialTag, etc. Alternatively, the target pattern may include a random dot maker. It should be noted that the target pattern of this embodiment is not limited to this, and may also be other special patterns, such as arrows.

S203, controlling the UAV to execute the target action instruction corresponding to the target identification information based on the target identification information.

In this embodiment, after obtaining the target identification information of the target pattern, the UAV can be controlled to execute the target action instruction corresponding to the target identification information based on the target identification information, thereby realizing the interaction with the UAV through the target pattern.

In some embodiments, the target action instruction may include an instruction for taking off, landing, circling, ascending, descending, forward, retreat, flipping, arching, and following. It should be noted that the target action instruction in this embodiment is not limited to the above-mentioned instructions.

For example, if the target identification information is ID0, the target action instruction may be an instruction to take off; if the target identification information is ID1, the target action instruction may be an instruction to flip; if the target identification information is ID2, the target action instruction may be an instruction to retreat; and if the target identification information is ID3, the target action instruction may be an instruction to follow the target pattern to fly.

In some embodiments, if there are a plurality pieces of target identification information, the UAV may preset the priority of the target action instruction corresponding to the target identification information. For example, when the target identification information is ID1 and ID2, the target action instructions may be an instruction to instruct flipping and an instruction to instruct retreat. Correspondingly, the UAV may, for example, perform the action of retreating and then flipping. In another embodiment, the UAV may also perform the actions of retreating and flipping at the same time, which is not limited here.

In this embodiment, by using the image acquisition device to obtain the image including the target pattern, identify the target pattern, and obtain the identification information of the target pattern as the target identification information, the UAV can be controlled to execute the target action instruction corresponding to the target identification information based on the target identification information. Therefore, the interaction with the UAV can be performed through the target pattern without the need for an additional control terminal to communicate with the UAV. In addition, the control accuracy of the UAV is high in this embodiment.

In some embodiments, the image including the target pattern may be displayed on a display carrier for the image acquisition device of the UAV to acquire. In some embodiments, the display carrier may include one or more of a mobile phone, a tablet computer, a notebook computer, a wearable device, a flexible screens, a tablet, and a paper. Therefore, when the user wants to control the UAV to execute an action instruction, the corresponding pattern may be displayed on any one of the above-mentioned display carriers, and the UAV may execute the corresponding action instruction after acquiring the pattern. In this way, the user's control operation of the UAV is simplified, which increases the user's interest in the UAV operation, and is suitable for application scenarios such as classrooms. It should be understood that the display carrier of the embodiments of the present disclosure is not limited to the above several types. Any suitable carrier that can be used to display the target pattern, such as a suitable carrier such as a mat, falls within the protection scope of the present disclosure.

In some embodiments, before executing the target action instruction, the UAV of this embodiment may also obtain the parameter information of the UAV. In some embodiments, the parameter information may include at least one of the attitude information, speed information, acceleration information, altitude information, position information, distance information, orientation information, power information, temperature information, time information, currently executed action information, and computing resource information. Then, based on the parameter information of the UAV, determine whether the UAV executes the target action instruction. If it is determined that the UAV will execute the target action instruction, the target action instruction described above can be executed. If it is determined that the UAV will not execute the target action instruction, the UAV may be controlled not to execute the target action instruction to ensure the flight safety of the UAV.

For example, if the target action instruction is an instruction to descend, and it is determined that the UAV is currently on the ground based on the parameter information of the UAV, it means that the UAV cannot execute the instruction to descend. If the target action instruction is an instruction to ascend, and it is determined that the UAV is currently at the maximum altitude based on the parameter information of the UAV, it means that the UAV cannot execute the instruction to ascend. If the target action instruction is an instruction to take off, and it is determined that the UAV has not taken off based on the parameter information of the UAV, it means that the UAV can execute the instruction to take off. If the target action instruction is an instruction to flip and it is determined that the UAV is in the air based on the parameter information of the UAV, it means that the UAV can execute the instruction to flip.

In one embodiment, when it is determined that based on the parameter information of the UAV that the UAV cannot execute the target action instruction, the UAV may not execute the target action instruction for instructing a descending. Further, the UAV may also generate a prompt instruction to remind the user that the target action instruction cannot be executed.

FIG. 3 is a flowchart of the movable platform control method according to another embodiment of the present disclosure. As shown in FIG. 3, in this embodiment, the UAV is taken as an example of the movable platform. The method of this embodiment can be applied to a UAV. The method includes the following processes.

S301, obtaining an image including a target pattern through an image acquisition device.

S302, identifying the target pattern and obtaining the identification information of the target pattern as the target identification information.

In this embodiment, for the specific implementation process of the processes at S301 and S302, reference may be made to the related description of the embodiment shown in FIG. 2, which will not be repeated here.

S303, determining the action instruction corresponding to the target identification information as the target action instruction based on the target identification information and an identification information database.

S304, controlling the UAV to execute the target action instruction.

In this embodiment, an identification information database may be preset, and the identification information database may include at least one correspondence between the identification information and the action instructions. In one embodiment, the identification information database may be disposed on the UAV. Further, if the at least one correspondence between the identification information and the action instructions include the correspondence between the target identification information and the target action instruction, then the UAV may query the identification information database based on the target identification information, obtain the correspondence between the target identification information and the target action instruction, and determine that the action instruction corresponding to the target identification information as the target action instruction based on the correspondence. Then the UAV may control the UAV to execute the target action instruction.

In this embodiment, by using the image acquisition device to obtain the image including the target pattern, identify the target pattern, the identification information of the target pattern can be obtained as the target identification information. Based on the target identification information and the identification information database preset by the UAV, the action instruction corresponding to the target identification information can be determined as the target action instruction, and the UAV can be controlled to execute the target action instruction. Therefore, the interaction with the UAV can be performed through the target pattern to control the UAV to execute the preset target action instructions without the need for an additional control terminal to communicate with the UAV. In addition, the control accuracy of the UAV is high in this embodiment.

In some embodiments, the aforementioned identification information database may be pre-burned into the flash storage of the UAV.

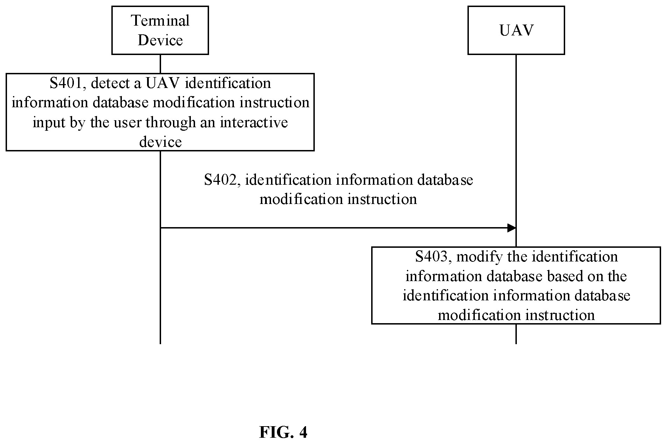

In some embodiments, if the aforementioned identification information database cannot meet the user's control needs, the user may modify the identification information database of the UAV. For example, when the identification information database is disposed on the UAV, an implementation process for the user to modify the identification information database of the UAV by operating the terminal device may be as shown in FIG. 4. FIG. 4 is a flowchart of the movable platform control method according to another embodiment of the present disclosure. The method of this embodiment may include the following processes.

S401, the terminal device detecting a UAV identification information database modification instruction input by the user through an interactive device.

In this embodiment, the terminal device can communicate with the UAV in a wireless manner. For example, the terminal device can send instructions to the UAV. In some embodiments, the terminal device may detect the UAV identification information database modification instruction input by the user. The terminal device may include one or more of a remote control, a smart phone, a tablet computer, a laptop computer, and a wearable device, which will not be repeated here. In some embodiments, the terminal device detecting the above-mentioned identification information database modification instruction may include the terminal device detecting the identification information database modification instruction through the interactive device. In some embodiments, the interactive device may be an important part of the terminal device and an interface for interacting with the user. The user may operate the UAV through the operation of the interactive device. In this embodiment, when the user wants to modify the identification information database of the UAV, the user can operate the interactive device to input an identification information database modification instruction, and the terminal device can detect the identification information database modification instruction through the interactive device. The interactive device may be one or more of a touch screen, a keyboard, a rocker, and a wave wheel of a terminal device.

S402, the terminal device sending the identification information database modification instruction to the UAV. Correspondingly, the UAV receives the identification information database modification instruction sent by the terminal device.

In this embodiment, the terminal device detects identification information database modification instruction, and determines the user modification of the UAV's identification information database. The terminal device then sends the identification information database modification instruction to the UAV, where the identification information database modification instruction can be used to instruct to modify the identification information database preset in the UAV.

Correspondingly, the UAV of this embodiment can receive the identification information database modification instruction sent by the terminal device.

In an alternative technical solution that can replace the processes at S401 and S402, the user may operate the UAV to modify the UAV's identification information database. That is, the user may input an instruction to modify the identification information database modification instruction to the UAV (e.g., the user may operate the buttons on the UAV's fuselage, etc.), and correspondingly, the UAV receives the identification information database modification instruction.

S403, the UAV modifying the identification information database based on the identification information database modification instruction.

The UAV may modify the identification information database based on the identification information database modification instruction. In some embodiments, modifying the identification information database may be modifying the identification information in the identification information database, modifying the action instructions in the identification information database, adding the correspondence between the identification information and the action instructions, or deleting the correspondence between the identification information and the action instructions.

In some embodiments, the modified identification information database may be used in the embodiment shown in FIG. 3 above.

Therefore, the identification information database can be modify through the embodiment shown in FIG. 4, such that the operation of the UAV to execute the action instruction based on the pattern is more in line with the user's habits and interests.

In some embodiments, modifying the identification information database may include modifying the patterns. Specifically, the terminal device may detect a UAV pattern modification instruction input by the user through the interactive device. Then the terminal device may send the pattern modification instruction to the UAV, the pattern modification instruction can be used to instruct to modify the correspondence between the at least one piece of identification information in the identification information database and the target action instruction into a correspondence between the target identification information of the target pattern and the target action instruction. The UAV receives the pattern modification instruction sent by the terminal device, and then based on the pattern modification instruction, the correspondence between at least one piece of identification information in the identification information database and the target action instruction can be modified into a correspondence between the target identification information of the target pattern and the target action instruction. It should be noted that this embodiment is not limited to modifying the identification information corresponding to the target action instruction, and the identification information corresponding to other action instructions can also be modified. It should can be understood that the user may also be modify the patterns in the identification information database by changing the target pattern, such as merely changing the correspondence between the target pattern and the target identification information, but the correspondence between the target identification information and the target action instruction may remain unchanged.

In some embodiments, modifying the identification information database may include modifying the action instructions. Specifically, the terminal device may detect an action modification instruction of the UAV input by the user through the interactive device. Then the terminal device may send the action modification instruction to the UAV, the action modification instruction can be used to instruction the action instruction corresponding to the target identification information of the target pattern in the identification information database to be modified into a target action instruction. The UAV receives the action modification instruction sent by the terminal device, and then modifies the action instruction corresponding to the target identification information of the target pattern in the identification information database tot eh target action instruction based on the action modification instruction. It should be understood that the modified target action instruction may be a different action instruction, or merely the parameters of the action instruction may be changed, which is not limited here. It should be noted that this embodiment is not limited to modifying the action instructions corresponding to the target identification information of the target pattern, and it is also possible to modify the action instructions corresponding to the identification information of other patterns.

In some embodiments, modifying the identification information database may include adding the correspondence between the identification information and the action instructions. Specifically, the terminal device may detect a target adding instruction of the UAV input by the user through the interactive device. Then the terminal device may send the target adding instruction to the UAV, the target adding instruction can be used to instruct to add the correspondence between the target identification information of the target pattern and the target action instruction in the identification information database. The UAV receives the target adding instruction sent by the terminal device, and then adds the correspondence between the target identification information and the target action instruction to the identification information database based on the target adding instruction. It should be noted that this embodiment is not limited to adding the correspondence between the target identification information of the target pattern and the target action instruction in the identification information database, and the correspondence between other identification information and other action instructions may also be added.

In some embodiments, modifying the identification information database may including deleting the correspondence between the identification information and the action instructions. Specifically, the terminal device may detect a target deletion instruction of the UAV input by the user through the interactive device. Then the terminal device may send the target deletion instruction to the UAV, the target deletion instruction can be used to instruct to delete the correspondence between the target identification information of the target pattern and the target action instruction in the identification information database. The UAV receives the target deletion instruction sent by the terminal device, and then deletes the correspondence between the target identification information and the target action instruction from the identification information database based on the target deletion instruction. It should be noted that this embodiment is not limited to deleting the correspondence between the target identification information of the target pattern and the target action instruction in the identification information database, and the correspondence between other identification information and other action instructions may also be deleted.

In some embodiments, the UAV of this embodiment may further store the modified identification information database described above.

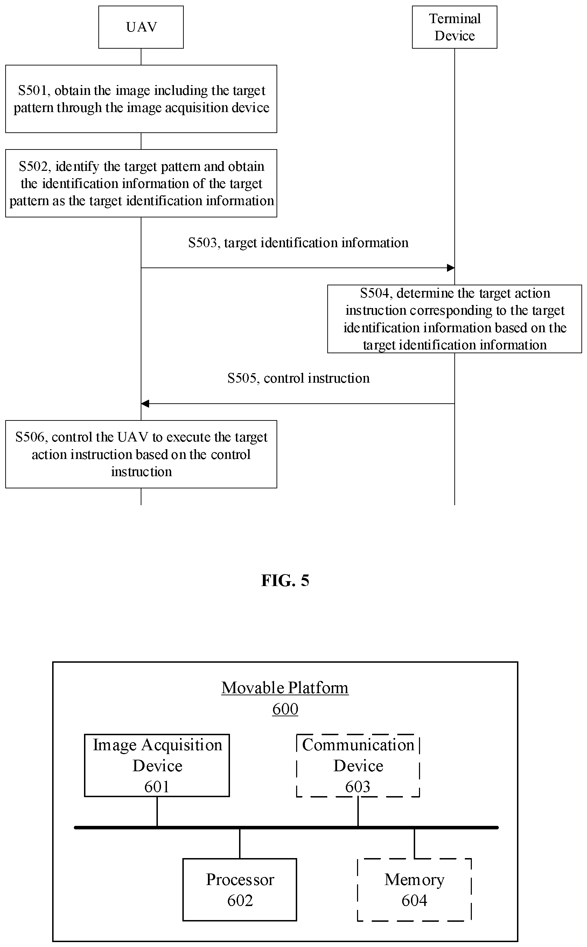

In addition, the target action instruction executed by the UAV may be obtained from the terminal device. Further, the identification information database may be disposed on the UAV or on the terminal device. In one implementation scenario, the identification information database may be disposed on the UAV, and the identification information database may not be disposed on the terminal device, but the identification information database may not include the target action instruction corresponding to the target identification information. In one implementation scenario, an identification information database may be disposed on the UAV, and an identification information database may also be disposed on the terminal device, but the UAV's identification information database may not include the target action instruction corresponding to the target identification information, and the terminal device's identification information database may include the target action instruction corresponding to the target identification information. In one implementation scenario, the identification information database may not be disposed on the UAV. Each of the foregoing implementation scenarios can be used in the technical solution shown in FIG. 5, but the technical solution shown in FIG. 5 is not limited to the foregoing implementation scenarios. As shown in FIG. 5, FIG. 5 is a flowchart of the movable platform control method according to another embodiment of the present disclosure. The method of this embodiment may include the following processes.

S501, the UAV obtaining the image including the target pattern through the image acquisition device.

S502, the UAV identifying the target pattern and obtaining the identification information of the target pattern as the target identification information.

In this embodiment, for the specific implementation process of the processes at S501 and S502, reference may be made to the related description of the embodiment shown in FIG. 2, which will not be repeated here.

In some embodiments, after the UAV identifies the target pattern and obtains the identification information of the target pattern as the target identification information, it may query the identification information database preset in the UAV. The identification information database may include at least one correspondence between the identification information and the action instructions. If the target identification information is not found in the identification information database, the UAV may execute the process at S503. In some embodiments, if the target identification information is found in the identification information database, the process may be as the technical solution shown in FIG. 3.

In some embodiments, after the UAV identifies the target pattern and obtains the identification information of the target pattern as the target identification information, the process at S503 can be executed.

S503, the UAV sending the target identification information to the terminal device.

In this embodiment, the UAV can send the target identification information of the target pattern to the terminal device. Correspondingly, the terminal device can receive the target identification information sent by the UAV.

In an alternative technical solution that can replace the processes at S502 and S503, after the UAV executes the process at S501, the UAV may identify the target pattern and send the target pattern to the terminal device. Correspondingly, the terminal device may receive the target pattern sent by the UAV, and then the terminal device may identify the target pattern and obtain the target identification information of the target pattern.

S504, the terminal device determining the target action instruction corresponding to the target identification information based on the target identification information.

In this embodiment, the terminal device can determine the target action instruction corresponding to the target identification information based on the received target identification information or the target identification information obtained by identifying the target pattern.

In some embodiments, the terminal device may be preset with an identification information database, and the identification information database may include at least one correspondence between the identification information and the target instructions. After the terminal device receives the target identification information sent by the UAV or identifies the target pattern to obtain the target identification information, it may determine the target action instruction corresponding to the target identification information based on the target identification information and the identification information database.

In some embodiments, the terminal device ma include a display screen. After receiving the target identification information sent by the UAV or identifying the target pattern to obtain the target identification information, the terminal device may display the target identification information through the display screen, such that the user can know the target identification information obtained by the UAV. Subsequently, the user may determine the action instruction corresponding to the target identification information, and the user may input the UAV control operation to the interactive device of the terminal device. The UAV control operation may be an operation of inputting the action instruction corresponding to the target identification information as the target action instruction. Correspondingly, the terminal device may detect the UAV control operation input by the user through the interactive device, and based on the UAV control operation, determine that the action instruction corresponding to the target identification information as the target action instruction.

In some embodiments, after the terminal device receives the target pattern sent by the UAV, the terminal device may also display the target pattern through the display screen described above, thereby letting the user know the target pattern obtained by the UAV.

S505, the terminal device sending a control instruction to the UAV. Correspondingly, the UAV receives the control instruction sent by the terminal device.

Subsequently, the terminal device can send the control instruction to the UAV. The control instruction can be used to control the UAV to execute the target action instruction.

The UAV of this embodiment may also send the parameter information of the UAV to the terminal device. Correspondingly, the terminal device may receive the parameter information of the UAV sent by the UAV, and determine whether the UAV executes the target action instruction based on the parameter information of the UAV. If it is determined that the UAV will execute the target action instruction, the control instruction described above may be sent to the UAV. If it is determine that the UAV will not execute the target action, the control instruction described above may not be sent to the UAV to ensure the safety of the UAV.

In some embodiments, the parameter information may include at least one of the attitude information, speed information, acceleration information, altitude information, position information, distance information, orientation information, power information, temperature information, time information, currently executed action information, and computing resource information.

For example, if the user wants to control the UAV to execute the flip instruction, and the UAV determines that the UAV is currently in the air based on the parameter information of the UAV, then it is determined that the UVA can execute the instruction to instruct the flip, and the control instruction to instruct the flip can be send to the UAV.

S506, the UAV controlling the UAV to execute the target action instruction based on the control instruction.

In this embodiment, after the UAV receives the control instruction sent by the terminal device, it can control the UAV to execute the aforementioned target action instruction based on the control instruction.

It should be noted that the terminal device involved in FIG. 5 and the terminal device involved in FIG. 4 may be the same terminal device or different terminal devices.

In this embodiment, the UAV can obtain an image including the target pattern through an image acquisition device, identify the target pattern, obtain the identification information of the target pattern as the target identification information, and send the target identification information to the terminal device. The terminal device can determined the target action instruction corresponding to the target identification information based on the target identification information, and send a control instruction to the UAV. The UAV can control the UAV to execute the target action instruction based on the control instruction. In this embodiment, the terminal device can be used to control the UAV to obtain the image including the target pattern and execute the corresponding target action instruction, such that the user can control the UAV by programming, which can be used in teaching scenarios to stimulate students' interest in UAV programming.

In some embodiments, if an identification information database is preset in the terminal device, the user may modify the identification information database of the terminal device. For example, the user may modify the identification information database preset in the terminal device by operating the terminal device (e.g., the interactive device of the terminal device). Specifically, the terminal device may receive an identification information database modification instruction input by the user, where the interactive device can be used to instruct to modify the identification information database, and then the terminal device may modify the identification information database based on the identification information database modification instruction.

In some embodiments, the identification information database modification instruction may include a pattern modification instruction. The pattern modification instruction can be used to instruct to modify the correspondence between at least one piece of identification information in the identification information database and the target action instruction to a correspondence between the target identification information of the target pattern and the target action instruction. Correspondingly, after receiving the pattern modification instruction, the terminal device may modify the correspondence between at least one piece of identification information in the identification information database and the target action instruction to a correspondence between the target identification information of the target pattern and the target action instruction based on the pattern modification instruction.

In some embodiments, the identification information database modification instruction may include a target adding instruction. The target adding instruction can be used to instruct to add the correspondence between the target identification information of the target pattern and the target action instruction in the identification information database. Correspondingly, after receiving the target adding instruction, the terminal device may add the correspondence between the target identification information and the target action instruction to the identification information database based on the target adding instruction.

In some embodiments, the identification information database modification instruction may include an action modification instruction. The action modification instruction can be used to instruct to modify the action instruction corresponding to the target identification information in the identification information database as the target action instruction. Correspondingly, after receiving the action modification instruction, the terminal device may modify the action instruction corresponding to the target identification information in the identification information database to the target action instruction based on the action modification instruction.

In some embodiments, the identification information database modification instruction may include a target deletion instruction. The target deletion instruction can be used to instruct to delete the correspondence between the target identification information and the target action instruction. Correspondingly, after receiving the target deletion instruction, the terminal device may delete the correspondence between the target identification information and the target action instruction in the identification information database based on the target deletion instruction.

In some embodiments, the terminal device of this embodiment may also store the modified identification information database described above.

An embodiment of the present disclosure further provides a computer storage medium. The computer storage medium stores program instructions, and the program may include part or all of the processes of the movable platform control method in the foregoing embodiments when the program is executed.

FIG. 6 is schematic structural diagram of a movable platform according to an embodiment of the present disclosure. As shown in FIG. 6, a movable platform 600 of this embodiment includes an image acquisition device 601 and a processor 602. In some embodiments, the movable platform 600 of this embodiment may further include a communication device 603. In some embodiments, the movable platform 600 of this embodiment may further include a memory 604. The image acquisition device 601, the processor 602, the communication device 603, and the memory 604 may be connected in communication via a bus.

The image acquisition device 601 may be configured to obtain images.

The processor 602 may be configured to obtain an image including the target pattern through an image acquisition device; identify the target pattern and obtain the identification information of the target pattern as the target identification information; and control the movable platform 600 to execute the target action instruction corresponding to the target identification information based on the target identification information.

In some embodiments, an identification information database may be preset, and the identification information database may include at least one correspondence between the identification information and the action instructions.

The processor 602 may be configured to determine the action instruction corresponding to the target identification information as the target action instruction based on the target identification information and the identification information database; and control the movable platform 600 to execute the target action instruction.

In some embodiments, the communication device 603 may be configured to receive an identification information database modification instruction, and the identification information database modification instruction may be used to instruct to modify the identification information database.

The processor 602 may be further configured to modify the identification information database based on the identification information database modification instruction.

In some embodiments, the identification information database modification instruction may include a pattern modification instruction. The pattern modification instruction can be used to instruct to modify the correspondence between at least one piece of identification information in the identification information database and the target action instruction to a correspondence between the target identification information of the target pattern and the target action instruction. The processor 602 may be configured to modify the correspondence between at least one piece of identification information in the identification information database and the target action instruction to a correspondence between the target identification information of the target pattern and the target action instruction based on the pattern modification instruction.

In some embodiments, the identification information database modification instruction may include a target adding instruction. The target adding instruction can be used to instruct to add the correspondence between the target identification information of the target pattern and the target action instruction in the identification information database. The processor 602 may be configured to add the correspondence between the target identification information and the target action instruction to the identification information database based on the target adding instruction.

In some embodiments, the identification information database modification instruction may include an action modification instruction. The action modification instruction can be used to instruct to modify the action instruction corresponding to the target identification information in the identification information database as the target action instruction. The processor 602 may be configured to modify the action instruction corresponding to the target identification information in the identification information database to the target action instruction based on the action modification instruction.

In some embodiments, the identification information database modification instruction may include a target deletion instruction. The target deletion instruction can be used to instruct to delete the correspondence between the target identification information and the target action instruction. The processor 602 may be configured to delete the correspondence between the target identification information and the target action instruction in the identification information database based on the target deletion instruction.

In some embodiments, the memory 604 may be configured to store the modified identification information database.

In some embodiments, the identification information database may be disposed in the movable platform 600.

In some embodiments, before executing the target action instruction corresponding to the target identification information, the processor 602 may be further configured to obtain the parameter information of the movable platform 600; and determine whether the movable platform 600 executes the target action instruction based on the target identification information and the parameter information.

In some embodiments, before the processor controls the movable platform to execute the target action instruction corresponding to the target identification information, the communication device 603 may be configured to send the target identification information to the terminal device, such that the terminal device can generate a control instruction based on the target identification information and send it to the movable platform 600. In some embodiments, the control instruction can be used to control the movable platform to execute the target action instruction. After sending the target pattern to the terminal device, the target pattern can be identified and the identification information of the target pattern as the target identification information can be obtained.

The communication device 603 may be further configured to receive the control instruction.

In some embodiments, before receiving the control instruction sent by the terminal device, the communication device 603 may be further configured to send the parameter information to the movable platform 600. In some embodiments, the terminal device may determine whether the control instruction can be used to control the movable platform 600 to execute the target action instruction based on the target identification information and the parameter information.

In some embodiments, the parameter information may include at least one of the attitude information, speed information, acceleration information, altitude information, position information, distance information, orientation information, power information, temperature information, time information, currently executed action information, and computing resource information.

In some embodiments, the target pattern may include a two-dimensional code or a random dot matrix.

In some embodiments, the image acquisition device 601 may be positioned in the front, rear, left, right, above, or below of the movable platform 600.

In some embodiments, at least one of the image acquisition devices 601 may be positioned at different positions of the movable platform 600. FIG. 6 shows an image acquisition device 601 as an example, but this embodiment is not limited thereto.

In some embodiments, before obtaining the image including the target pattern by the image acquisition device 601, the processor 602 may be further configured to obtain an image acquisition setting instruction. The image acquisition setting instruction may be used to select an image acquisition mode.

When obtaining the image including the target pattern through the image acquisition device 601, the processor 602 may be configured to obtain an image including the target pattern through the image acquisition device 601 based on the image acquisition mode.

In some embodiments, there is at least one image acquisition device 601. The image acquisition mode may include a single image acquisition device 601 capturing a signal image or a plurality of images, a plurality of image acquisition devices 601 alternately capturing a plurality of images, and a plurality of image acquisition devices 601 simultaneously capturing a plurality of images.

In some embodiments, the target action instruction may include an instruction for taking off, landing, circling, ascending, descending, forward, retreat, flipping, arching, and following.

In some embodiments, the image including the target pattern may be displayed on a display carrier.

In some embodiments, the display carrier may include one or more of a mobile phone, a tablet computer, a notebook computer, a wearable device, a flexible screens, a tablet, and a paper.

In some embodiments, the memory 604 described above may be used to store program codes. When the program codes are executed, the movable platform 600 may implement the technical solution described above.

In some embodiments, the processor 602 may include a flight controller.

The movable platform of this embodiment can be used to implement the technical solutions of the UAV in the foregoing method embodiments of the present disclosure. The implementation principles and technical effects are similar, and will not be repeated here.

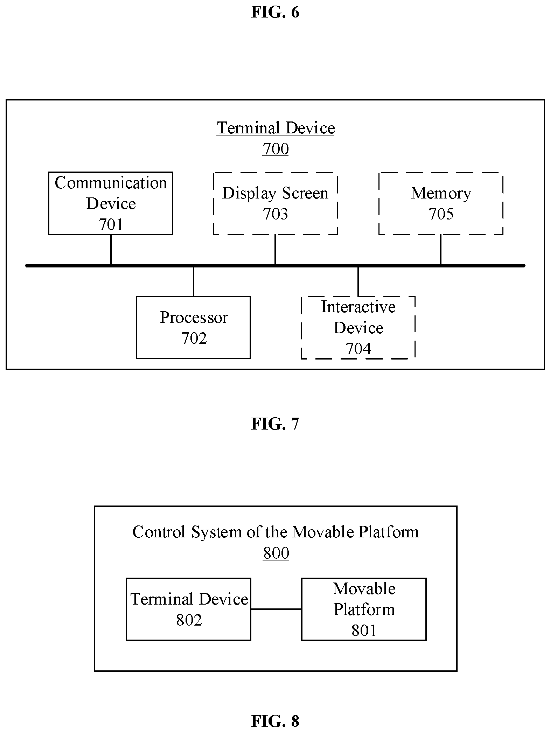

FIG. 7 is a schematic structural diagram of a terminal device according to an embodiment of the present disclosure. As shown in FIG. 7, a terminal device 700 of this embodiment includes a communication device 701 and a processor 702. In some embodiments, the terminal device 700 of this embodiment may also include a display screen 703 and an interactive device 704. In some embodiments, the terminal device 700 of this embodiment may also include a memory 705. The 701, the processor 702, the display screen 703, the interactive device 704, and the memory 705 may be connected in communication via a bus.

The communication device 701 may be configured to receive target patterns or the target identification information sent by a movable platform. The processor 702 may be configured to determine the target action instruction corresponding to the target identification information based on the target identification information. In some embodiments, after the communication device 701 receives the target pattern sent by the movable platform, the processor 702 may be further configured to identify the target pattern, and obtain the identification information of the target pattern as the target identification information. The communication device 701 may be further configured to send a control instruction to the movable platform. The control instruction may be used to control the movable platform to execute the target action instruction.

In some embodiments, the processor 702 may be configured to display the target pattern or the target identification information through the display screen 703, detect the movable platform control operation input by the user through the interactive device 704, and determine the target action instruction based on the movable platform control operation.

In some embodiments, before sending the control instruction to the movable platform, the processor 702 may be further configured to receive the parameter information of the movable platform sent by the movable platform, and determine whether the movable platform executes the target action instruction based on the parameter information of the movable platform.

In some embodiments, the parameter information may include at least one of the attitude information, speed information, acceleration information, altitude information, position information, distance information, orientation information, power information, temperature information, time information, currently executed action information, and computing resource information.

In some embodiments, an identification information database may be preset. The identification information database may include at least one correspondence between the identification information and the action instructions. The processor may be configured to determine the action instruction corresponding to the target identification information as the target action instruction based on the target identification information and the identification information database.

In some embodiments, the communication device 701 may be further configured to receive an identification information database modification instruction, where the identification information database modification instruction can be used to instruct to modify the identification information database. The processor 702 may be further configured to modify the identification information database based on the identification information database modification instruction.

In some embodiments, the identification information database modification instruction may include a pattern modification instruction. The pattern modification instruction may be used to instruct to modify the correspondence between at least one piece of identification information in the identification information database and the target action instruction to a correspondence between the target identification information of the target pattern and the target action instruction.

In some embodiments, the identification information database modification instruction may include a target adding instruction. The target adding instruction may be used to instruct to add the correspondence between the target identification information of the target pattern and the target action instruction in the identification information database.

In some embodiments, the identification information database modification instruction may include an action modification instruction. The action modification instruction may be used to instruct to modify the action instruction corresponding to the target identification information of the target pattern in the identification information database as the target action instruction.

In some embodiments, the identification information database modification instruction may include a target deletion instruction. The target deletion instruction may be used to instruct to delete the correspondence between the target identification information and the target action instruction.

In some embodiments, the memory 705 may be configured to store the modified identification information database.

In some embodiments, the identification information database may be disposed in the terminal device.

In some embodiments, the target pattern may include a two-dimensional code or a random dot matrix.

In some embodiments, the memory 705 may be used to store program codes. When the program codes are executed, the terminal device 700 may implement the technical solution described above.

The terminal device of this embodiment can be used to implement the technical solutions of the terminal device in the foregoing method embodiments of the present disclosure. The implementation principles and technical effects are similar, and will not be repeated here.

The processor involves in any of the foregoing embodiments may be a central processing unit (CPU). The processor may also be other general-purpose processors, digital signal processors (DSPs), application specific integrated circuits (ASICs), field-programmable gate arrays (FPGAs), or other programmable logic devices, discrete gates or transistor logic devices, discrete hardware components, etc. The general-purpose processor may be a microprocessor or the processor may also be any conventional processor or the like.

FIG. 8 is a schematic structural diagram of a movable platform control system according to an embodiment of the present disclosure. As shown in FIG. 8, a movable platform control system 800 of this embodiment includes a movable platform 801 and a terminal device 802. The movable platform 801 may adopt the structure of the embodiment shown in FIG. 6, which correspondingly can execute the technical solutions of the UAV in the above method embodiments. Its implementation principle and technical effects are similar, and will not be repeated here. The terminal device 802 may adopt the structure of the embodiment shown in FIG. 7, which correspondingly can execute the technical solutions of the UAV terminal device the above method embodiments. Its implementation principle and technical effects are similar, and will not be repeated here.

Those skilled in the art can understand that a method consistent with the disclosure can be implemented in the form of computer program stored in a non-transitory computer-readable storage medium, which can be sold or used as a standalone product. The computer program can include instructions that enable a computer device, such as a personal computer, a server, or a network device, to perform part or all of a method consistent with the disclosure, such as one of the exemplary methods described above. The storage medium can be any medium that can store program codes, for example, a USB disk, a mobile hard disk, a read-only memory (ROM), a random access memory (RAM), a magnetic disk, or an optical disk.

Finally, it should be noted that the foregoing embodiments are merely intended for describing the technical solutions of the present disclosure, but not to limit the present disclosure. Although the present disclosure is described in detail with reference to the foregoing embodiments, it should be understood by those of ordinary skill in the art that the technical solutions described in the foregoing embodiments may still be modified, or a part or all of the technical features may be equivalently replaced without departing from the spirit and scope of the present disclosure. As a result, these modifications or replacements do not make the essence of the corresponding technical solutions depart from the scope of the technical solutions of the present disclosure.

## Claims

1. A movable platform control method applied to a movable platform, comprising:
obtaining an image including a target pattern through an image acquisition device;
identifying the target pattern and obtaining identification information of the target pattern as target identification information; and
controlling the movable platform to execute a target action instruction corresponding to the target identification information based on the target identification information.

2. The method of claim 1, wherein:
an identification information database is preset, the identification information database including at least one correspondence between the identification information and a plurality of action instructions, and
controlling the movable platform to execute the target action instruction corresponding to the target identification information based on the target identification information includes:
determining the action instruction corresponding to the target identification information as the target action instruction based on the target identification information and the identification information database; and
controlling the movable platform to execute the target action instruction.

3. The method of claim 2, further comprising:
receiving an identification information database modification instruction, the identification information database modification instruction being used to instruct to modify the identification information database; and
modifying the identification information database based on the identification information database modification instruction.

4. The method of claim 3, wherein:
the identification information database modification instruction includes a pattern modification instruction, the pattern modification instruction being used to instruct to modify a correspondence between at least one piece of identification information in the identification information database and the target action instruction to a correspondence between the target identification information of the target pattern and the target action instruction, and
modifying the identification information database based on the identification information database modification instruction includes:
modifying the correspondence between the at least one piece of identification information in the identification information database and the target action instruction into the correspondence between the target identification information of the target pattern and the target action instruction based on the pattern modification instruction.

5. The method of claim 3, wherein:
the identification information database modification instruction includes a target adding instruction, the target adding instruction being used to instruct to add the correspondence between the target identification information of the target pattern and the target action instruction in the identification information database, and
modifying the identification information database based on the identification information database modification instruction includes:
adding the correspondence between the target identification information and the target action instruction to the identification information database based on the target adding instruction.

6. The method of claim 3, wherein:
the identification information database modification instruction includes an action modification instruction, the action modification instruction being used to instruct to modify the action instruction corresponding to the target identification information in the identification information database as the target action instruction, and
modifying the identification information database based on the identification information database modification instruction includes:
modifying the action instruction corresponding to the target identification information in the identification information database to the target action instruction based on the action modification instruction.

7. The method of claim 3, wherein:
the identification information database modification instruction includes a target deletion instruction, the target deletion instruction being used to instruct to delete the correspondence between the target identification information and the target action instruction, and
modifying the identification information database based on the identification information database modification instruction includes:
deleting the correspondence between the target identification information and the target action instruction in the identification information database based on the target deletion instruction.

8. The method of any one of claims 3 to 7, further comprising:
storing the modified identification information database.

9. The method of claim 2, wherein
the identification information database is disposed on the movable platform.

10. The method of claim 1, wherein before the movable platform executes the target action instruction corresponding to the target identification information, further comprising:
obtaining parameter information of the movable platform; and
determining whether the movable platform executes the target action instruction based on the target identification information and the parameter information.

11. The method of claim 1, wherein before controlling the movable platform to execute the target action instruction corresponding to the target identification information based on the target identification information, further comprising:
sending the target pattern or the target identification information to a terminal device, for the terminal device to generate a control instruction based on the target pattern or the target identification information, and sending the control instruction to the movable platform, the control instruction being used to control the movable platform to execute the target action instruction, after sending the target pattern to the terminal device, the terminal device identifying the target pattern and obtaining the identification information of the target pattern as the target identification information; and
receiving the control instruction.

12. The method of claim 11, wherein before receiving the control instruction, further comprising:
sending the parameter information of the movable platform to the terminal device, wherein:
the terminal device is configured to determine whether the control instruction is used to control the movable platform to execute the target action instruction based on the target identification information and the parameter information.

13. The method of claim 10 or 12, wherein:
the parameter information includes at least one of attitude information, speed information, acceleration information, altitude information, position information, distance information, orientation information, power information, temperature information, time information, currently executed action information, and computing resource information.

14. The method of claim 1, wherein:
the target pattern includes a two-dimensional code or a random dot matrix.

15. The method of claim 1 wherein:
the image acquisition device is positioned in front, rear, left, right, above, or below the movable platform.

16. The method of claim 1, wherein:
at least one of the image acquisition devices is positioned at different positions of the movable platform.

17. The method of claim 1, wherein before obtaining the image including the target pattern through the image acquisition device, further comprising:
obtaining an image acquisition setting instruction, the image acquisition setting instruction being used to select an image acquisition mode, and
obtaining the image including the target pattern through the image acquisition device includes:
obtaining the image including the target pattern through the image acquisition device based on the image acquisition mode.

18. The method of claim 17, wherein:
there is at least one image acquisition device, and
the image acquisition mode includes a single image acquisition device obtaining a single image or a plurality of images, a plurality of image acquisition devices alternately obtaining the plurality of images, and the plurality of image acquisition devices simultaneously obtaining the plurality of images.

19. The method of claim 1, wherein:
the target action instruction includes instructions for taking off, landing, circling, ascending, descending, forward, retreating, flipping, arcing, and following.

20. The method of claim 1, wherein:
the imaging including the target pattern is displayed on a display carrier.

21. The method of claim 20, wherein:
the display carrier includes one or more of mobile phones, tablet computers, notebook computers, wearable devices, flexible screens, tablets, and paper.

22. A movable platform control method applied to a terminal device, comprising:
receiving a target pattern or target identification information sent by a movable platform, after receiving the target pattern sent by the movable platform, identifying the target pattern, and obtaining identification information of the target pattern as the target identification information;
determining a target action instruction corresponding to the target identification information based on the target identification information; and
sending a control instruction to the movable platform, the control instruction being used to control the movable platform to execute the target action instruction.

23. The method of claim 22, wherein:
the terminal device further includes a display screen, the display screen displaying the target pattern or the target identification information;
an interactive device is configured to detect a movable platform control operation input by the user; and
the target action instruction is determined based on the movable platform control operation.

24. The method of claim 22 or 23, wherein before sending the control instruction to the movable platform, the method includes:
receiving parameter information of the movable platform sent by the movable platform; and
determining whether the movable platform executes the target action instruction based on the parameter information of the movable platform.

25. The method of claim 24, wherein:
the parameter information includes at least one of attitude information, speed information, acceleration information, altitude information, position information, distance information, orientation information, power information, temperature information, time information, currently executed action information, and computing resource information.

26. The method of claim 22, wherein:
an identification information database is preset, the identification information database including at least one correspondence between the identification information and a plurality of action instructions, and
determining the target action instruction corresponding to the target identification information based on the target identification information includes:
determining the action instruction corresponding to the target identification information as the target action instruction based on the target identification information and the identification information database.

27. The method of claim 26, further comprising:
receiving an identification information database modification instruction, the identification information database modification instruction being used to instruct to modify the identification information database; and
modifying the identification information database based on the identification information database modification instruction.

28. The method of claim 27, wherein:
the identification information database modification instruction includes a pattern modification instruction, the pattern modification instruction being used to instruct to modify a correspondence between at least one piece of identification information in the identification information database and the target action instruction to a correspondence between the target identification information of the target pattern and the target action instruction, and
modifying the identification information database based on the identification information database modification instruction includes:
modifying the correspondence between the at least one piece of identification information in the identification information database and the target action instruction into the correspondence between the target identification information of the target pattern and the target action instruction based on the pattern modification instruction.

29. The method of claim 27, wherein:
the identification information database modification instruction includes a target adding instruction, the target adding instruction being used to instruct to add the correspondence between the target identification information of the target pattern and the target action instruction in the identification information database, and
modifying the identification information database based on the identification information database modification instruction includes:
adding the correspondence between the target identification information and the target action instruction to the identification information database based on the target adding instruction.

30. The method of claim 27, wherein:
the identification information database modification instruction includes an action modification instruction, the action modification instruction being used to instruct to modify the action instruction corresponding to the target identification information in the identification information database as the target action instruction, and
modifying the identification information database based on the identification information database modification instruction includes:
modifying the action instruction corresponding to the target identification information in the identification information database to the target action instruction based on the action modification instruction.

31. The method of claim 27, wherein:
the identification information database modification instruction includes a target deletion instruction, the target deletion instruction being used to instruct to delete the correspondence between the target identification information and the target action instruction, and
modifying the identification information database based on the identification information database modification instruction includes:
deleting the correspondence between the target identification information and the target action instruction in the identification information database based on the target deletion instruction.

32. The method of any one of claims 27 to 31, further comprising:
storing the modified identification information database.

33. The method of claim 26, wherein:
the identification information database is disposed on the terminal device.

34. The method of claim 22, wherein:
the target pattern includes a two-dimensional code or a random dot matrix.

35. A movable platform comprising an image acquisition device and a processor, wherein:
the image acquisition device is configured to obtain images;
the processor is configured to obtain an image including a target pattern through the image acquisition device; identify the target pattern and obtain identification information of the target pattern as target identification information; and control a movable platform to execute a target action instruction corresponding to the target identification information based on the target identification information.

36. The movable platform of claim 35, wherein:
an identification information database is preset, the identification information database including at least one correspondence between the identification information and a plurality of action instructions, and
the processor is configured to determine the action instruction corresponding to the target identification information as the target action instruction based on the target identification information and the identification information database; and
control the movable platform to execute the target action instruction.

37. The movable platform of claim 36, further comprising:
a communication device configured to receive an identification information database modification instruction, the identification information database modification instruction being used to instruct to modify the identification information database, wherein
the processor is further configured to modify the identification information databased based on the identification information database modification instruction.

38. The movable platform of claim 37, wherein:
the identification information database modification instruction includes a pattern modification instruction, the pattern modification instruction being used to instruct to modify a correspondence between at least one piece of identification information in the identification information database and the target action instruction to a correspondence between the target identification information of the target pattern and the target action instruction, and
the processor is configured to modify the correspondence between the at least one piece of identification information in the identification information database and the target action instruction into the correspondence between the target identification information of the target pattern and the target action instruction based on the pattern modification instruction.

39. The movable platform of claim 37, wherein:
the identification information database modification instruction includes a target adding instruction, the target adding instruction being used to instruct to add the correspondence between the target identification information of the target pattern and the target action instruction in the identification information database, and
the processor is configured to add the correspondence between the target identification information and the target action instruction to the identification information database based on the target adding instruction.

40. The movable platform of claim 37, wherein:
the identification information database modification instruction includes an action modification instruction, the action modification instruction being used to instruct to modify the action instruction corresponding to the target identification information in the identification information database as the target action instruction, and
the processor is configured to modify the action instruction corresponding to the target identification information in the identification information database to the target action instruction based on the action modification instruction.

41. The movable platform of claim 37, wherein:
the identification information database modification instruction includes a target deletion instruction, the target deletion instruction being used to instruct to delete the correspondence between the target identification information and the target action instruction, and
the processor is configured to delete the correspondence between the target identification information and the target action instruction in the identification information database based on the target deletion instruction.

42. The movable platform of any one of claims 37 to 41, further comprising:
a memory configured to store the modified identification information database.

43. The movable platform of claim 35, wherein:
the identification information database is disposed on the movable platform.

44. The movable platform of claim 35, wherein before executing the target action instruction corresponding to the target identification information, the processor is further configured to:
obtain parameter information of the movable platform; and
determine whether the movable platform executes the target action instruction based on the target identification information and the parameter information.

45. The movable platform of claim 35, further comprising:
a communication device, the communication device being configured to, before the processor controlling the movable platform to execute the target action instruction corresponding to the target identification information, send the target pattern or the target identification information to a terminal device for the terminal device to generate a control instruction based on the target pattern or the target identification information, and send the control instruction to the movable platform; and receive the control instruction.

46. The movable platform of claim 45, wherein:
the communication device is further configured to send the parameter information of the movable platform to the terminal device before receiving the control instruction sent by the terminal device., the terminal device determining whether the control instruction is used to control the movable platform to execute the target action instruction based on the target identification information and the parameter information.

47. The movable platform of claim 44 or 46, wherein:
the parameter information includes at least one of attitude information, speed information, acceleration information, altitude information, position information, distance information, orientation information, power information, temperature information, time information, currently executed action information, and computing resource information.

48. The movable platform of claim 35, wherein:
the target pattern includes a two-dimensional code or a random dot matrix.

49. The movable platform of claim 35 wherein:
the image acquisition device is positioned in front, rear, left, right, above, or below the movable platform.

50. The movable platform of claim 35, wherein:
at least one of the image acquisition devices is positioned at different positions of the movable platform.

51. The movable platform of claim 35, wherein:
before obtaining the image including the target pattern through the image acquisition device, the processor is further configured to obtain an image acquisition setting instruction, the image acquisition setting instruction being used to select an image acquisition mode; and
the processor obtaining the image including the target pattern through the image acquisition device includes:
obtaining the image including the target pattern through the image acquisition device based on the image acquisition mode.

52. The movable platform of claim 51, wherein:
there is at least one image acquisition device, and
the image acquisition mode includes a single image acquisition device obtaining a single image or a plurality of images, a plurality of image acquisition devices alternately obtaining the plurality of images, and the plurality of image acquisition devices simultaneously obtaining the plurality of images.

53. The movable platform of claim 35, wherein:
the target action instruction includes instructions for taking off, landing, circling, ascending, descending, forward, retreating, flipping, arcing, and following.

54. The movable platform of claim 35, wherein:
the imaging including the target pattern is displayed on a display carrier.

55. The movable platform of claim 54, wherein:
the display carrier includes one or more of mobile phones, tablet computers, notebook computers, wearable devices, flexible screens, tablets, and paper.

56. A terminal device comprising a communication device and a processor, wherein:
the communication device is configured to receive a target pattern or target identification information sent by a movable platform;
the processor is configured to determine a target action instruction corresponding to the target identification information based on the target identification information, and identify the target pattern and obtain identification information of the target pattern as the target identification information after the communication device receives the target pattern sent by the movable platform; and
the communication device is further configured to send a control instruction to the movable platform, the control instruction being used to control the movable platform to execute the target action instruction.

57. The terminal device of claim 56 further comprising a display screen and an interactive device, wherein:
the processor is configured to display the target pattern or the target identification information through the display screen; detect a movable platform control operation input by a user through the interactive device; and determine the target action instruction based on the movable platform control operation.

58. The terminal device of claim 56 or 57, wherein:
the communication device is further configured to receive parameter information of the movable platform sent by the movable platform before sending the control instruction to the movable platform; and determine whether the movable platform executes the target action instruction based on the parameter information of the movable platform.

59. The terminal device of claim 41, wherein:
the parameter information includes at least one of attitude information, speed information, acceleration information, altitude information, position information, distance information, orientation information, power information, temperature information, time information, currently executed action information, and computing resource information.

60. The terminal device of claim 56, wherein:
an identification information database is preset, the identification information database including at least one correspondence between the identification information and a plurality of action instructions, and
the processor is configured to determine the action instruction corresponding to the target identification information as the target action instruction based on the target identification information and the identification information database.

61. The terminal device of claim 60, wherein:
the communication device is further configured to receive an identification information database modification instruction, the identification information database modification instruction being used to instruct to modify the identification information database; and
the processor is further configured to modify the identification information database based on the identification information database modification instruction.

62. The terminal device of claim 61, wherein:
the identification information database modification instruction includes a pattern modification instruction, the pattern modification instruction being used to instruct to modify a correspondence between at least one piece of identification information in the identification information database and the target action instruction to a correspondence between the target identification information of the target pattern and the target action instruction.

63. The terminal device of claim 61, wherein:
the identification information database modification instruction includes a target adding instruction, the target adding instruction being used to instruct to add the correspondence between the target identification information of the target pattern and the target action instruction in the identification information database.

64. The terminal device of claim 61, wherein:
the identification information database modification instruction includes an action modification instruction, the action modification instruction being used to instruct to modify the action instruction corresponding to the target identification information of the target pattern in the identification information database as the target action instruction.

65. The terminal device of claim 61, wherein:
the identification information database modification instruction includes a target deletion instruction, the target deletion instruction being used to instruct to delete the correspondence between the target identification information of the target pattern and the target action instruction.

66. The terminal device of any one of claims 61 to 65, further comprising:
a memory configured to store the modified identification information database.

67. The terminal device of claim 60, wherein:
the identification information database is disposed on the terminal device.

68. The terminal device of claim 56, wherein:
the target pattern includes a two-dimensional code or a random dot matrix.

69. A control system for a movable platform, comprising
the movable platform according to any one of claims 35 to 55; and
the terminal device according to any one of claims 56 to 68.

70. A computer storage medium, comprising:
a computer program, the computer program including at least one piece of code, the at least one piece of code being executable by a computer to control the computer to execute the movable platform control method according to any one of claims 1 to 21 or any one of claims 22 to 34.

71. A computer program, comprising:
when being executed by a computer, the computer program is used to implement the movable platform control method according to any one of claims 1 to 21 or any one of claims 22 to 34.
